# EUROPEAN PATENT APPLICATION

(11) **EP 1 049 328 A1**
(43) Date of publication of application: **02.11.2000**
(21) Application number: 00108078.7
(22) Date of filing: 25.04.2000
(51) Int. Cl.: H04N 5/445, H04N 7/16

(54) **Method for providing interactive program guide information**

(30) Priority: 29.04.1999 US 301874
(71) Applicant: AT&T Corp., New York, NY 10013-2412 (US)
(72) Inventor: Gilboy, Christopher P., Freehold, New Jersey 07728 (US)
(74) Representative: Modiano, Guido, Dr.-Ing.

(57) **Abstract**

A viewer may enjoy viewing a program listing that indicates viewer preferences obtained by monitoring the viewers's viewing habits. For each program viewed, at least two characteristics of the program (e.g., viewing duration, viewing frequency and program content) are monitored, and if at least one characteristic meets a prescribed threshold, the identity of the program whose characteristic met the prescribed threshold is recorded. The recorded program preferences are employed to create a filter for application on a standard program listing to create a listing identifying user preferences.

## Description

### Technical Field

This invention relates to a technique for displaying information to a viewer to enable the viewer to select one or more programs.

### Background Art

Presently, many cable televisions companies, such as TCI, now part of the AT&T' Broadband and Internet Services Group, provide subscribers with a large number channels, thus offering subscribers a wide array of program choices. As transmission bandwidth increases, subscribers may ultimately enjoy hundreds of different channels. The plethora of program choices makes it difficult for a viewer to decide which program if any to watch. Absent a specific program choice in mind, a viewer will often "channel surf" by sequentially viewing each channel for a short interval before ultimately selecting one for viewing. Channel surfing is time consuming, and annoying to others watching the same television set.

Rather than resort to channel surfing, some viewers will consult a program guide displayed by their cable television provider on an unused channel or will consult a printed program guide, such as program guide printed by many newspapers, in order to determine what programs are available and when. The usefulness of such program guides depends largely how current they are. Most purveyors of hard-copy program guides publish weekly listing program choices, whereas most cable television providers display a daily listing. Reliance on a published guide requires the viewer to make sure he or she has accurately identified the program guide listing for the appropriate day and time, often not a trivial task give the large number of listings contained in present day program guides. While the program guide displayed by most cable television providers generally simplifies this problem, a viewer watching the program guide usually must wait for the displayed program listings to scroll until the viewer has identified a program of interest, usually a frustrating experience.

Effort to overcome these deficiencies have prompted the development of interactive program guides such as the guide technique disclosed in U.S. Patent 5,465,113, issued in the name of Christopher P. Gilboy on November, 7, 1995. The program guide technique disclosed in the Gilboy '113 includes a cable controller that accepts a time limit and time period input by the viewer. A channel timer measures the time period during which a program is displayed. Upon reaching the preset limit, display of the program is blocked. The channel timer is reset upon expiration of the reset time. Additionally, the cable controller disclosed in the Gilboy '113 patent possesses the capability of programming listings and a viewer's programming preferences for application against a standard programming listing. In this way, the controller can display a redacted list of programs reflecting the user's preferences.

While the programming guide technique disclosed in the Gilboy '113 patent affords greater viewer control over programming selection, the viewer must interact with the cable controller to create or alter program preferences. As programming choices continue to expand, the increasing need for viewer intervention to create and alter preferences will likely prove cumbersome, if not annoying.

Thus, there is need for a technique for automatically establishing viewer preferences.

### Brief Summary of the Invention

Briefly, the present invention provides a technique for automatically learning viewer preferences to allow a viewer to establish a personal viewing profile while minimizing any required interaction. In accordance with a preferred embodiment, the programs viewed by the viewer are monitored, typically via a set-top box, that records programming information (e.g., the channel number, the program title and content) when certain thresholds, such as time duration and frequency of channel selection, are met. Thus, for example, if the subscriber has viewed a program for a particular time period, say ten minutes, and has previously selected the program a prescribed number of times within a given time period, a record of that preference is maintained, typically in the set top box. When the viewer requests a program listing, the learned information is used to filter a full program guide to present the user with a subset of programs most likely to be of interest to the viewer, based on past experience.

### Brief Description of the Drawings

FIGURE 1 depicts a block schematic diagram of a cable television network architecture according to the prior art;
FIGURE 2 depicts a block schematic diagram of a set-top box of the type found within the cable network architecture of FIG. 1.
FIGURE 3 depicts a flow chart representation of the steps performed by the set-top box of FIG. 2 to ascertain the viewer's preference in accordance with the invention; and
FIGURE 4 depicts a flow chart representation of the steps performed by the set-top box of FIG. 2 to filter program listings to present the viewer with a list of program preferences in accordance with the invention.

### Detailed Description

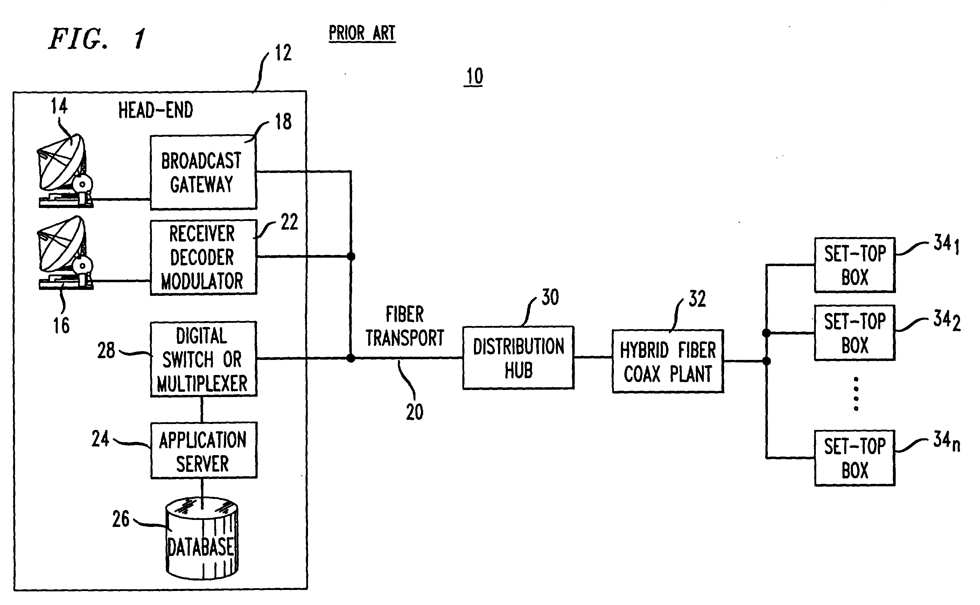

FIGURE 1 depicts a block schematic diagram of the typical architecture of a cable television network 10 in accordance with the prior art. The network 10 includes a head-end 12 at which a cable television service provider, such as TCI, now part of the AT&T' Broadband and Internet Services Group, aggregates television programming. For example, the head end 12 may include a first satellite receiver 14 for receiving content from at least one broadcast network, and a second satellite receiver 16 for receiving encoded content from a program provider, such as Home Box Office or the like. A broadcast gateway 18 modulates the output of the satellite 18 onto a fiber transport 20 while a receiver decoder-modulator 22 decrypts and modulates the content received by the satellite onto the fiber 20.

In the illustrated embodiment, the head end 12 also includes an applications server 24, in the form of a computer or the like, capable of accessing a database 26 that contains subscriber information. A digital switch/multiplexer 28 couples the server 24 to the fiber transport 20 to enable the server to send downstream information to, and receive upstream information from the subscribers served by the head end 12. Among the functions performed by the application server 24 is the provisioning of pay-per-view programming.

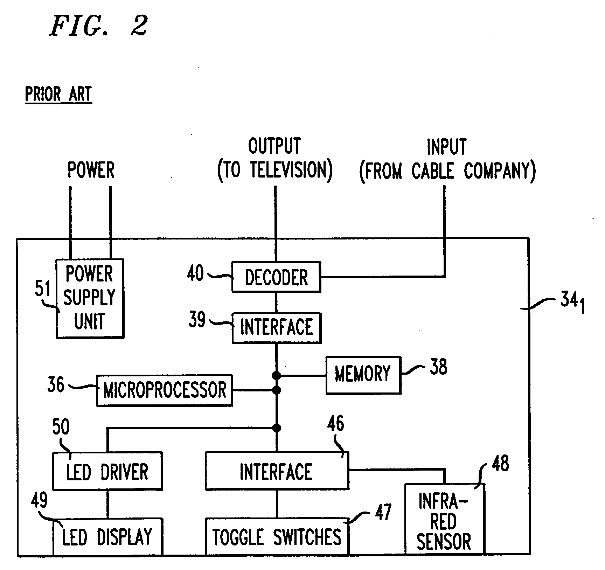

A distribution hub 30 couples the fiber 20 to a hybrid fiber-coax distribution network (plant) 32 that serves a plurality of subscribers, each connected to the coax plant through a separate one of set-top boxes 34₁-34_{*n*}, where *n* is an integer. Figure 2 depicts a block schematic diagram of a conventional set-top box 34₁. The set-top box 34₁ includes a microprocessor 36 that controls the operation of the set-top box in accordance with instructions and data stored in a memory 38. The microprocessor 36 also responds to information and data received through an interface 39 from a decoder 40 that serves to decode information from the cable television provider for output to a television set (not shown). An interface 46 couples the microprocessor 36 to a set of toggle switches 47 as well an infrared sensor 48. A subscriber may enter program selections or other relevant information by actuating the toggle switches 47 or by sending infrared signals via a remote control (not shown) for receipt at the infrared sensor 48. The microprocessor 36 displays output data to the subscriber via an LED display 49 driven by an LED driver 50. A power supply unit 51 provides the necessary power for the above-described components of the set-top box.

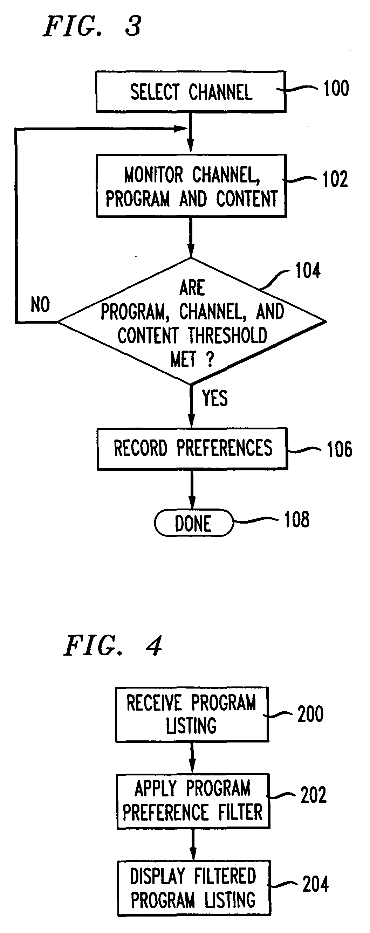

FIGURE 3 depicts a flow chart of the steps executed by the microprocessor 36 of to "learn" the subscriber preferences to create an interactive filter to winnow a standard program listing to provide the subscriber with a subset of preferred listings. The learning process commences upon selection of a channel (step 100) by the viewer, either by actuating one of the toggle switches 47 of FIG. 2 or by actuating a remote control to send infrared signals to the infrared sensor 48 of FIG. 2. Upon channel selection, the microprocessor 36 of FIG. 2 monitors the selected channel (step 102). While monitoring the channel, the microprocessor 36 determines whether the viewer's selection has triggered one or more thresholds (step 104). For example, the microprocessor 36 monitors whether the viewer has watched the selected program for a prescribed duration. Additionally, the microprocessor 36 may also determine whether the viewer previously selected this same program a predetermined number of times, and whether the viewer previously selected other programs with a similar content.

If none of the program duration, frequency or content thresholds are met, the microprocessor 36 returns to step 102 and continues monitoring these parameters. Otherwise when the threshold of at least one of the two or more selected parameters (program duration, frequency and content) is met, the microprocessor 36 of FIG. 2 records the program preference (e.g., program identity) in memory 38 of FIG. 2 (step 108). Thus, for example, if program duration is a selected parameter and the viewer has viewed a program for the prescribed duration, the microprocessor 36 will record the identity of the program for the purpose of tracking the customer's preference for future program filtering as described with respect to FIG. 4. Similarly, if the program selection frequency is a selected parameter, and the viewer has selected the particular program at least a predetermined number of times, say twice, the microprocessor 36 records the program identity. Further, if the program content is a selected parameter, and the viewer has watched other programs of the same content a predetermined number of times, say twice, the microprocessor 36 records the program identity. Once the viewer has ceased viewing, program execution ends (step 108)

The microprocessor 36 automatically records the viewer preferences when one or more of the thresholds are met. Thus, the viewer need not take any action other than normal channel selection. Indeed, regardless of how many different channels or different types of programs the viewer watches, the microprocessor 36 will track the preferences in the manner discussed above. The viewer can selectively adjust the thresholds discussed above with respect to program duration, frequency and content. Thus, a viewer, by appropriate commands to the microprocessor 36, may establish whether the program duration threshold is 15 minutes, or some period that is shorter or longer. Similarly, the viewer, by entering appropriate commands, can vary the program frequency and content thresholds. Additionally, the viewer can select which two (or more) of the program duration, frequency and content parameters are monitored for establishing the viewer's preference. Further, while the program duration, frequency and content thresholds are typically stored in the memory 38 of FIG. 2, the thresholds could conceivably be stored in the database 26 of FIG. 1.

Referring to FIG. 4, the microprocessor 36 of FIG. 2 uses the preference information established in connection with the steps depicted in FIG. 3 to filter the program listings in the manner depicted in FIG. 4. Initially, the microprocessor 36 receives a program listing, typically, although not necessarily, from the application server 24 of FIG. 1. (Step 200). Thereafter, the microprocessor 36 creates and applies a preference filter to the program list during step 202. To this end, the microprocessor 36 first creates a preference list, based on the program identities recorded during step 106 of FIG. 3. Thereafter, the microprocessor 36 compares the program list received during step 200 to the recorded list to identify those programs in the received program list corresponding to the preferences. In this way, the microprocessor establishes a "filtered" program list for display during step 204. The displayed program list could include only the preferences previously recorded, or could include all program listings, with the preferences highlighted or otherwise distinguished, such as by display ahead of non-preferred programs.

The foregoing describes an interactive program guide technique that displays viewer preferences from learned viewer selections.

The above-described embodiments merely illustrate the principles of the invention. Those skilled in the art may make various modifications and changes that will embody the principles of the invention and fall within the spirit and scope thereof.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. A method for providing interactive program information based on viewer preferences, comprising the steps of:
monitoring at least two characteristics associated with each program selected by a viewer for viewing to determine for at least one characteristic, a prescribed threshold is met; and if so
recording an identifier for said program whose one characteristic met its corresponding threshold to establish a user preference;
filtering a standard program listing in accordance with said user preference to establish a subset of said program listing likely to be of interest to the viewer; and
displaying said program listing subset.

2. The method according to claim 1 wherein said two characteristics include at least two of: program content, program viewing during, and frequency of program selection.

3. The method according to claim 2 wherein program content, program viewing during, and frequency of program selection are all monitored.

4. The method according to claim 2 wherein said two program characteristics are monitored to determine for each characteristic whether a prescribed threshold associated with that characteristic is met.

5. The method according to claim 3 wherein program content, program viewing during, and frequency of program selection are all monitored to determine for each characteristic whether a prescribed threshold associated with that characteristic is met.

6. The method according to claim 1 wherein one of said two characteristics is program duration and wherein said prescribed threshold is fifteen minutes.

7. The method according to claim 1 wherein one of said two characteristics is program frequency and wherein said prescribed threshold is twice viewing the same program.

8. The method according to claim 1 wherein one of said two characteristics is program content and wherein said prescribed threshold is twice viewing programs of the same content.

9. A method for providing interactive program information based on viewer preferences, comprising the steps of:
monitoring, for each program viewed by a user, characteristics that include program content, program viewing duration and program viewing frequency, to determine for at least one characteristic, a prescribed threshold is met; and if so
recording an identifier for said program whose one characteristic met its corresponding threshold to establish a user preference;
filtering a standard program listing in accordance with said user preference to establish a subset of said program listing likely to be of interest to the viewer; and
displaying said program listing subset.

10. The method according to claim 9 wherein the monitoring step includes determining for at least two characteristics whether a threshold for each characteristic is met.

11. The method according to claim 9 wherein the monitoring step includes determining for at all two characteristics whether a threshold for each characteristic is met.

12. The method according to claim 9 wherein said prescribed threshold for program viewing duration is fifteen minutes.

13. The method according to claim 9 wherein said prescribed threshold for program viewing frequency is twice viewing the same program.

14. The method according to claim 9 wherein in prescribed threshold for program content is twice viewing programs having the same content.
